# EUROPEAN PATENT APPLICATION

(11) **EP 4 799 995 A1**
(43) Date of publication of application: **02.09.2026**
(21) Application number: 26150971.5
(22) Date of filing: 09.01.2026
(51) Int. Cl.: C05F 1/00, C05F 11/08

(54) **METHOD FOR PRODUCING BIOFERTILISERS AND AGRONOMIC BIOSTIMULANTS**

(30) Priority: 27.02.2025 ES 202530163
(71) Applicant: Brave Bio Green, S.L., 48610 Urduliz (Bizkaia) (ES)
(72) Inventor: PARRADO RUBIO, Juan, 41012 Sevilla (ES)
(74) Representative: Rebate Conde, Maria Fernanda

(57) **Abstract**

The present invention relates to a method for producing a biofertiliser, an agronomic biostimulant and/or an organic nitrogen fertiliser from waste products such as wool and whey.

## Description

### Field of the invention

The method of the invention falls within the area of the circular economy, specifically organic farming, and discloses a method for producing biofertiliser from wool and whey.

### Background

The method of the invention falls within the area of the circular economy and aims to use agro-industrial by-products to generate sustainable inputs that improve agricultural productivity.

The handling and management of sheep wool is a growing challenge. Much of it may end up as waste without being processed. This can lead to an unnecessary accumulation of waste that, if left unmanaged, can become an environmental and health problem. It is mainly handled by incineration in thermal plants. If the wool is not properly processed or reused, it may end up in landfills where, due to its organic nature, it can take a long time to decompose. This can contribute to soil contamination and increased greenhouse gases.

Shorn wool is often not clean and contains dirt and excrement. This makes it difficult to reuse as it must be cleaned before it can be treated. Currently, the treatment of wool is highly polluting as it requires the use of abundant water to clean it, which entails an excessive use of a scarce waste, also causing the water to become polluted.

At present, there are alternatives for using processed wool as fertiliser. However, the drawback of these processes is that they take a very long time to complete.

Document CN118496043A describes a fertiliser containing fermented wool. To produce the fertiliser, a *Bacillus subtilis* culture is used to ferment the wool for 12-36 hours and then a keratinase is added.

Document CN119059842A discloses an organic fertiliser made from *Bacillus, Aspergillus oryzae,* yeast and wool waste. The fertiliser is made by inoculating said microorganisms into the wool waste for fermentation and composting.

Document CN103820352A shows how *Bacillus cereus* is used to ferment sheep wool. The product obtained can be used as a fertiliser.

The inventors of this invention have come to the surprising discovery of using whey, which is also a waste product of the dairy industry, the handling of which is also a major challenge today, to process wool into agricultural inputs. The advantages of the method of the invention are as follows:
- Use of 2 different wastes (wool and whey) in a single industrial process
- Faster than the existing pre-treatment of wool.
- Clean water savings, whey is mostly made up of water
- Obtaining various products of interest for agricultural use: Biofertilisers, agronomic biostimulants and organic nitrogen fertiliser
- The method of the invention is environmentally friendly as the required temperatures are low compared to existing processes in the state of the art and the water from the starting waste (whey) can be reused.

### Description of the invention

In this specification, the terms "fermentation" and "solid-state fermentation" are synonymous and used interchangeably. Both the first fermentation and the second fermentation are solid-state fermentations, the first being lactic and the second being keratinolytic.

As used in this specification, the term "microorganisms" includes bacteria.

As used in this specification, the term "lactic acid bacteria" refers to any type of strain, species or genus of bacteria capable of lactic fermentation.

As used in this specification, the term "keratinolytic bacteria" refers to any type of strain, species or genus of bacteria that has keratinolytic activity.

A first object of the invention relates to a method for producing a biofertiliser comprising the following steps:
a) shredding wool to a size suitable for degradation by bacteria
b) bringing the shredded wool from the previous step into contact with whey containing at least one species of lactic acid bacteria and carrying out a first fermentation,
c) bringing the product from the previous step into contact with at least one species of keratinolytic bacteria and carrying out a second fermentation to produce the biofertiliser.

In a particular embodiment, the second fermentation can occur before the first fermentation. Degradation of wool should be understood to mean that it can be used by microorganisms, preferably bacteria, for fermentation.

In another particular embodiment, the method of the invention comprises eliminating at least 90% of the microorganisms, preferably at least 91%, more preferably 92%, even more preferably 93% or 94% or 95% or 96% or 97% or 98% or 99% and even more preferably 100% of the microorganisms, preferably bacteria, present in wool, prior to the embodiment of the method of the invention, or, preferably when the shredded wool is brought into contact with the whey and before the first fermentation. The advantage of eliminating all microorganisms originally present in the wool is that pathogens that may pose a health or environmental problem if present in the final product are eliminated. Furthermore, these microorganisms can affect the fermentation process due to competition for nutrients with the bacteria present in the whey.

The microorganisms can be eliminated or sterilised by means of protocols and devices that are common in the technical area, for example, by autoclaving, or steam hydrolysers which can be continuous or batch hydrolysers. The basic conditions for sterilisation with steam hydrolysers are 1 Bar for 20 minutes, preferably 2 Bar and 30 minutes.

In a preferred embodiment, the microorganisms are eliminated or sterilised by a treatment with pressure and temperature approximately between 125°C to 140°C, a pressure between 1.5 and 2 Bar and a time interval between 25 and 35 minutes, preferably 135°C and 2 Bar for 30 minutes. Any method for eliminating or sterilising animal by-products not intended for human consumption (SANDACH) is suitable for the method of the invention. Any elimination or sterilisation method that meets the requirements of Commission Regulation (EU) No 142/2011 of 25 February 2011 is suitable for the method of the invention.

In another particular embodiment, the wool is not washed prior to shredding. Not washing the wool saves money and reduces the environmental impact as no water is wasted.

In another particular embodiment, the wool comes from alpacas, llamas, sheep and/or goats, preferably sheep. The wool may be a mixture of wools from different species.

In step a) of the method, the wool is shredded by milling or grinding, preferably using a hammer mill to obtain a particle size of less than 3 mm in length, preferably less than 2 mm and more preferably 1 mm or less. A hammer mill is preferably used. In another additional embodiment, the wool can be shredded by chemical means, for example, by adding potash.

In step b) of the method, the shredded wool is mixed with the whey in a ratio of approximately 10:1 to 1:10, preferably approximately 8:1 to 1:8, more preferably approximately 6:1 to 1:6, even more preferably approximately 4:1 to 1:4, even more preferably approximately 2:1 to 1:2, or approximately 1:1; Preferably until the moisture content of the shredded wool is approximately 15% to 50% by weight, preferably approximately 20% to 45% by weight, more preferably approximately 25% to 40% by weight, even more preferably approximately 30% to 38% by weight, or approximately 35% by weight, where moisture content is related to the water content present in whey as whey is mainly composed of water. Adding extra water is optional. Moisture content is the water content of the product and it can be determined using any method known in the state of the art, preferably a thermogravimetric method by means of which changes in the mass of a sample weighed before and after drying are measured, for example, according to standard UNE-EN ISO 6540:2022 Moisture content. Moisture content can also be determined by Karl Fischer titration, according to standard ISO D 760.

In another particular embodiment, the whey comes from the milk of a mammal, the milk may come from a single species or a mixture of 2 or more species, for example sheep, goats, cows and/or horses. Preferably, the whey is obtained from cheese making.

In a preferred embodiment, both the wool and the whey are from sheep.

Whey is the watery part of the milk (85-95% of the total volume) obtained in cheese production. It consists mainly of water 94%, lactose (4-5%), soluble proteins (1%) and mineral salts (0.25%). Whey contains beneficial crop nutrients such as nitrogen (protein), phosphorus, potassium, calcium, magnesium and sulphur, and is also a source of growth for microorganisms. Whey naturally contains lactic acid bacteria, so when the whey is brought into contact with the shredded wool, fermentation will occur spontaneously.

In a particular embodiment, the whey may have been partially deproteinised before being used in the method of the invention.

In a preferred embodiment, an inoculum is added to the whey, the inoculum containing at least one species of lactic acid bacteria, which convert lactose into organic acids, mainly lactic acid, preferably at least species of the genus *Lactobacillus* or *Streptococcus,* or at least one of the following species *Lactobacillus plantarum, Lactobacillus casei, Lactobacillus hilgardii, Lactobacillus helveticus, Streptococcus lactis, Lactobacillus rhamnosus,* and/or *Lactobacillus fermentum.* The inoculum can be added before, during or after bringing the whey into contact with the shredded wool in step b). What is important is that the bacterial species has the appropriate metabolic pathways to carry out lactic fermentation. Preferably, the inoculum is *Lactobacillus rhamnosus.*

In a particular embodiment, the amount of inoculum is at least 5% weight/weight; preferably between 3% w/w and 10% w/w; preferably at least 4% w/w and 6% w/w. for example, at least 10² colony-forming units per millilitre (CFU/ml), or approximately 10³ CFU/ml, or approximately 10⁴ CFU/ml, or approximately 10⁵ CFU/ml, or approximately 10⁶ CFU/ml, or approximately 10⁷ CFU/ml, or approximately 10⁸ CFU/ml, or approximately 10⁹ CFU/ml, or approximately 10¹⁰ CFU/ml, or approximately 10¹¹ CFU/ml. Or any CFU/ml value between these values.

When an inoculum of lactic acid bacteria is added, all microorganisms originally present in the wool are eliminated after contact of the shredded wool with the whey and before the first fermentation. An advantage of using inocula of lactic acid bacteria is that the reproducibility of the process, as well as the uniformity of the characteristics of the final biofertiliser, is better controlled. Whey can have different microbial compositions resulting in slightly different biofertilisers, and a more uniform product is obtained by replacing the species of microorganisms and bacteria originally present in the whey and wool with an inoculum. As an additional advantage, it is not necessary to use sterile conditions during fermentation as the amount of bacteria in the inoculum is sufficiently high to be predominant.

The first fermentation can last between approximately 12 hours and 72 hours, preferably between approximately 24 hours and 68 hours, more preferably between approximately 24 hours and 65 hours, even more preferably between approximately 30 hours and 52 hours, or approximately 48 hours; the temperature is approximately between 35°C and 45°C, preferably approximately between 37°C and 45°C, even more preferably approximately between 39°C and 45°C, even more preferably approximately between 40°C and 45°C, even more preferably approximately between 41°C and 45°C, even more preferably approximately between 42°C and 45°C.

A person skilled in the art using common general knowledge would be able to identify when the first fermentation is complete. The first fermentation is understood to be completed when the pH is equal to or less than 6, preferably equal to or less than 5.5; or 5 or less; approximately 3; or approximately 4. An additional advantage of the method of the invention is that it is not necessary to control the pH to keep it at the initial values at the beginning of the first fermentation, with the consequent money savings that this entails, with only monitoring being required.

In a preferred embodiment, the first fermentation lasts for approximately 48 hours and takes place at a temperature up to approximately 45°C, preferably approximately 42°C.

In step c) of the method, the fermented product from the previous step is brought into contact with at least one species of keratinolytic bacteria which solubilise and hydrolyse the keratin in the wool, the species of keratinolytic bacteria belongs to the genus *Bacillus,* for example, *Bacillus subtilis, Bacillus velezensis* and *Bacillus licheniformis,* preferably *Bacillus subtilis* or bacterial consortia of keratinolytic bacteria, preferably the aforementioned keratinolytic bacteria.

The inoculum of keratinolytic bacteria is at least 5% weight/weight; preferably between 3% w/w and 10% w/w; preferably at least 4% w/w and 6% w/w. for example, at least 10² colony-forming units per millilitre (CFU/ml), or approximately 10³ CFU/ml, or approximately 10⁴ CFU/ml, or approximately 10⁵ CFU/ml, or approximately 10⁶ CFU/ml, or approximately 10⁷ CFU/ml, or approximately 10⁸ CFU/ml, or approximately 10⁹ CFU/ml, or approximately 10¹⁰ CFU/ml, or approximately 10¹¹ CFU/ml. Or any CFU/ml value between these values.

The advantages indicated above for the inoculum of lactic acid bacteria are also applicable to the inoculum of keratinolytic bacteria.

A person skilled in the art using common general knowledge would be able to identify when the first fermentation is complete. In a particular embodiment, the first fermentation is carried out for the appropriate time until the pH is approximately 6 or less, preferably 5.5 or less; or 5 or less; approximately 3; or approximately 4.

The second fermentation lasts between approximately 12 hours and 120 hours, preferably between approximately 24 hours and 110 hours, more preferably between approximately 36 hours and 105 hours, even more preferably between approximately 40 hours and 100 hours, or between approximately 72 hours and 96 hours; the temperature is approximately between 35°C and 45°C, preferably approximately between 37°C and 45°C, even more preferably approximately between 39°C and 45°C, even more preferably approximately between 40°C and 45°C, even more preferably approximately between 41°C and 45°C, even more preferably approximately between 42°C and 45°C.

A person skilled in the art using common general knowledge would be able to identify when the first fermentation is complete. The second fermentation is understood to be completed when the pH is equal to or higher than 7.5; preferably equal to or higher than 8; more preferably equal to or higher than 8.5, or between 8 and 9, thus producing the biofertiliser. An additional advantage of the method of the invention is that it is not necessary to control the pH to keep it at a particular value, with the consequent money savings that this entails.

In a preferred embodiment, the second fermentation lasts approximately 3 to 4 days, at a temperature up to approximately 45°C, preferably approximately 42°C.

In a particular embodiment, both fermentations occur in the same reactor, without the product of the first fermentation being removed, by sequential addition of the inocula of lactic acid and/or keratinolytic bacteria.

In a particular embodiment, the biofertiliser from step c) is pelletised to produce a product that is easier to transport, pelletisation being carried out according to standard protocols in the state of the art. Other suitable product formats may be powder or granules. Any format suitable for use in agriculture can be used.

In another particular embodiment, there is a drying step prior to pelletisation of the product from step c) of the method. The drying step allows the water from the process to be recovered for other uses, achieving the goal of recycling 100% of the whey used in the process, optimising the employability of the resources derived from the process.

An additional object of the invention relates to the biofertiliser produced according to the method described above containing lactic acid and keratinolytic bacteria, preferably *Lactobacillus rhamnosus* and *Bacillus subtilis.* The biofertiliser of the invention has a high potassium content. Potassium is key to the productivity and health of crops, as it increases drought resistance, increases tolerance to cold and frost, and reduces salt stress.

An additional object of the invention relates to a method for producing an agronomic biostimulant and an organic nitrogen fertiliser comprising the following steps
- performing enzymatic hydrolysis of the product produced after the two fermentations according to the method described above
- separating the liquid fraction from the solid fraction of the product from the previous step, the solid fraction being the organic nitrogen fertiliser.
- concentrating the liquid fraction from the previous step to produce the biostimulant.

Preferably, the hydrolysis of the product is performed before pelletisation as this makes the method more efficient and reduces drying and pelletisation costs.

In a particular embodiment, whey is added to the product produced after the two fermentations (biofertiliser) prior to enzymatic hydrolysis, the biofertiliser is mixed with the whey in a ratio of approximately 10:1 to 1:10, preferably approximately 8:1 to 1:8, more preferably approximately 6:1 to 1:6, even more preferably approximately 4:1 to 1:4, even more preferably approximately 2:1 to 1:2, or approximately 1:1;

In a particular embodiment, the enzyme used in enzymatic hydrolysis is an endoprotease, for example, trypsin, chymotrypsin, subtilisin, and granzyme, preferably subtilisin. The enzyme can be used at a concentration between 0.05 and 0.2% by weight, preferably approximately 0.1% by weight and/or at an enzyme activity of at least 500, preferably 650 units of enzyme activity/g.

The enzymatic reaction can occur at a temperature of approximately 50 to 60°C, preferably approximately 55°C and a pH of approximately 8 to 10, preferably between 8.5 and 10.5, more preferably approximately 9.5, and for a time period between 2 and 24 hours.

The separation and/or concentration of the liquid fraction from the solid fraction can be performed by any method known in the state of the art to separate a liquid component from a solid component and, for example, by centrifugation, filtration and/or evaporation. In a particular embodiment, the concentration of the liquid fraction occurs simultaneously with the separation of said liquid fraction with the solid fraction.

An additional object of the invention relates to an organic biostimulant produced by the method defined above which is water-soluble and contains protein hydrolysates and lactic acid, preferably amino acids and lactic acid.

The organic agronomic biostimulant has a high proline content, which is particularly relevant as this amino acid plays a fundamental role in the water balance of the plant, allows photosynthesis to be maintained under adverse conditions (salinity, drought) and is a regulator of the internal functioning of the plant and a stimulant in situations of plant stress.

An additional object of the invention relates to the use of the biofertiliser, agronomic biostimulant and/or organic nitrogen fertiliser as agronomic biostimulant, particularly for one or more of the following effects: improving tolerance to water stress, reducing salt stress, and improving nutrient absorption. Application can be foliar and/or soil application, to a part of the plant (roots, leaves, fruit, seeds) or to the whole plant.

Each of the terms "comprising", "consisting essentially of" and "consisting of" can be replaced by either of the other two terms. The terms "a" or "an" may refer to one or a plurality of the elements they modify (for example, "a reagent" can mean one or more reagents), unless it is contextually clear that one or more of the elements are described. The term "approximately", as used herein, refers to a value within 10% of the underlying parameter (i.e, about 10%; for example, a weight of "approximately 100 grams" may include a weight between 90 grams and 110 grams). The use of the term "approximately" at the beginning of a list of values modifies each of the values (for example, "approximately 1, 2 and 3" refers to "approximately 1, approximately 2 and approximately 3"). When describing a list of values, the list includes all intermediate values and all fractional values thereof (for example, the list of values "80%, 85% or 90%" includes the intermediate value 86% and the fractional value 86.4%). When a list of values is followed by the term "or more", the term "or more" applies to each of the values listed (for example, the list of "80%, 90%, 95% or more" or "80%, 90% or 95% or more" refers to "80% or more, 90% or more, or 95% or more"). When describing a list of values, the list includes all ranges between two of the listed values (for example, the list of "80%, 90% or 95%" includes ranges from "80% to 90%", "80% to 95%" and "90% to 95%"). Next, some examples of implementation of the present invention are given below

### Exemplary embodiments

### Example 1

1000 grams of sheep wool are milled in a hammer mill until they become a powdered product, having a fibre size less than 1 millimetre.

600 grams of sheep whey.

### Step 1.- Solid-state fermentation step

Step 1 is a fermentation process involving two different types of fermentation that take place consecutively.

**The first phase of this step** is fermentation with lactic acid bacteria. To this end, the species *Lactobacillus rhamnosus,* which produces lactic acid and has a biofertilising capacity, is chosen as the fermentation tool.

The milled wool (1000 grams) is mixed with whey (600 grams).

The mixture of wool and whey is subjected to a sterilisation process by applying temperature and pressure (1 atmospheric pressure, 121 degrees, 15 minutes).

The mixture (1600 gr) is inoculated with 80 grams of an inoculum (5% weight/weight) of *Lactobacillus rhamnosus* (10⁹ colony-forming units per millilitre).

The inoculum was obtained from whey with *Lactobacillus rhamnosus.*

The mixture is introduced into a solid-state fermenter with the following characteristics: the inoculated mixture is introduced and evenly stacked to a height of 30 cm, and there are no limits in terms of width and length.

The conditions of this process are the following.

Temperature of 42 degrees, without stirring, uncontrolled pH, where this pH during fermentation lowers to pH 5.5, at which point the first phase ends. In this example, the duration was 48 hours

**The second phase of this step** is keratinolytic fermentation. To this end, *Bacillus subtilis,* which is a microorganism with a biofertilising capacity, is chosen as the fermentation tool.

The fermented mixture at pH 5.5 produced in the first step is the substrate used in this second step.

The above mixture is inoculated inside the fermenter with 80 grams of *Bacillus subtilis* inoculum at 5% weight/weight of the wet wool, with a concentration of 10⁹ CFU/gr.

The inoculum was produced from fermentation of a commercial medium with *Bacillus subtilis,* following a protocol known in the state of the art.

The fermentation process is carried out at a temperature of 42 degrees, without stirring, uncontrolled pH and no sterility control.

Fermentation is monitored by tracking the pH of wet wool and the number of bacteria per gram, which, preferably, must reach legal values to be considered as a fertiliser with microorganisms (10⁷ CFU/gr).

The pH rises from pH 5 to pH 9, at which point the second phase ends (it has the suitable concentration of bacteria). In this example, the duration was 3 days.

After fermentation is complete, the bifermented wool or biofertiliser is dried and stored for use as an organic nitrogen fertiliser with microorganisms.

### Bifermented wool composition

### 1. Chemical

The final product contains nitrogen, mostly in organic form. Nitrogen in organic form is that which is part of organic molecules of natural origin. In the present specification, the term refers to nitrogen in proteins, peptides and amino acids. This is especially beneficial for the final product as nitrogen as part of organic compounds acts as a biostimulant. It also has a high lactic acid content, specifically 1.5% w/w. The nitrogen levels are determined following standard protocols in the area such as, for example, the Dumas method, ion chromatography and HPLC. The content of nutrients, particularly nitrogen, is independent of the moisture content of the biofertiliser (Table 1).

**Table 1**

| On dry matter | |
|---|---|
| Nitrogen | |
| **Total** | 9.82 (w/w)% |
| **Organic** | 9.20 (w/w)% |
| **Ammoniacal** | 0.61 (w/w)% |
| **Urea** | 0.01 (w/w)% |

### 2. Microbiological

It has a content of 9.5 x 10⁸ CFU/gr. The following table shows the number of CFU in the final product grown on LB or MRS lactose medium (Agar Man, Rogosa and Sharpe) (Table 2).

**Table 2**

| 2 days | LB (Bacillus) | MRS Lactose (Lactic acid bacteria) |
|---|---|---|
| CFU/g | 1.6X10⁸ | 1.1x10¹⁰ |

### 3. Minerals

The results of the microelements in the biofertiliser are shown in Table 3.

**Table 3**

| Microelements | mg/kg |
|---|---|
| **Calcium** | 2130 |
| **Copper** | 21 |
| **Phosphorus** | 146 |
| **Iron** | 39 |
| **Magnesium** | 953 |
| **Manganese** | 5 |
| **Potassium** | 1542 |
| **Zinc** | 101 |
| **Sulphur (SO3)** | 397282 |

It contains minerals that are important in plant nutrition, where the high potassium content is especially relevant.

In other additional experiments, the following combinations of microorganisms were tested and in all cases a bifermented wool or biofertiliser with similar characteristics to those shown in the example was obtained. The specific combinations of microorganisms were: 1st fermentation *L. rhamnosus* and 2nd fermentation one of *Bacillus velezensis* and *Bacillus licheniformis;* 1st fermentation one of *Lactobacillus plantarum, Lactobacillus casei, Lactobacillus hilgardii, Lactobacillus helveticus, Streptococcus lactis, Lactobacillus rhamnosus,* and/or *Lactobacillus fermentum,* and 2nd fermentation one of *Bacillus subtilis*; 1st fermentation *L. plantarum* and 2nd fermentation one of *B. subtilis, Bacillus velezensis* and *Bacillus licheniformis;* 1st fermentation *L. casei* and 2nd fermentation one of *B. subtilis, Bacillus velezensis* and *Bacillus licheniformis;* 1st fermentation *L. hilgardii* and 2nd fermentation one of *B. subtilis, Bacillus velezensis* and *Bacillus licheniformis;* 1st fermentation *L. helveticus* and 2nd fermentation one of *B. subtilis, Bacillus velezensis* and *Bacillus licheniformis;* 1st fermentation *Streptococcus lactis* and 2nd fermentation one of *B. subtilis, Bacillus velezensis* and *Bacillus licheniformis;* 1st fermentation *L. fermentum* and 2nd fermentation one of *B. subtilis, Bacillus velezensis* and *Bacillus licheniformis;* 1st fermentation *L. plantarum* and 2nd fermentation one of *B. subtilis, Bacillus velezensis* and *Bacillus licheniformis;* 1st fermentation one of *Lactobacillus rhamnosus, Lactobacillus plantarum, Lactobacillus casei, Lactobacillus hilgardii, Lactobacillus helveticus, Streptococcus lactis, Lactobacillus rhamnosus,* and/or *Lactobacillus fermentum,* and 2nd fermentation *Bacillus velezensis*; 1st fermentation one of *Lactobacillus rhamnosus, Lactobacillus plantarum, Lactobacillus casei, Lactobacillus hilgardii, Lactobacillus helveticus, Streptococcus lactis, Lactobacillus rhamnosus,* and/or *Lactobacillus fermentum,* and 2nd fermentation *Bacillus licheniformis.*

### Second phase: enzymatic hydrolysis

A new agronomic product, a water-soluble product containing protein hydrolysates, which is an organic biostimulant, is produced.

To this end, enzymatic hydrolysis technology of wool proteins will be used.

The material to be hydrolysed will be bifermented wool, as it is much more susceptible to hydrolysis since it has undergone pre-digestion of keratins during the fermentation phase.

150 grams of bifermented wool, 850 grams of whey by dry weight is added to it, and whey is added to it, in a bioreactor with pH, stirring and temperature control.

A protease is then added, specifically subtilisin, 3 millilitres (0.1% v/v) with an enzyme activity of 650 enzyme activity units/ml.

The pH is kept constant at pH 9, at 55°C with potassium hydroxide (KOH).

Hydrolysis lasts 8 hours, and after hydrolysis was completed, the hydrolysate was processed in several steps.
- Separation of a liquid fraction and the solid fraction from the bifermented wool hydrolysate by centrifugation.

The enzymatic solubilisation yield is 70% w/w; therefore, the liquid fraction contains 70% of the proteins in soluble form and a solid non-soluble fraction containing the remaining 30%.

The liquid product, an organic biostimulant, has the following characteristics: it is a water-soluble product, which chemical and free amino acid composition is shown in the table. Nitrogen, mainly organic, is its main component. Tables 4 and 5.

**Table 4**

| On dry matter | |
|---|---|
| Nitrogen | |
| **Total** | 13.5 (w/w)% |
| **Organic** | 12.0 (w/w)% |
| **Ammoniacal** | 1.5 (w/w)% |
| **Urea** | 0.2 (w/w)% |

**Table 5**

| Free AA % w/w | |
|---|---|
| **Aspartic a.** | 5.27 |
| **Glutamic a.** | 12.865 |
| **Alanine** | 3.72 |
| **Arginine** | 9.61 |
| **Cystine** | 3.875 |
| **Phenylalanine** | * |
| **Glycine** | 5.27 |
| **Glutamine** | * |
| **Histidine** | 4.65 |
| **Isoleucine** | 4.34 |
| **Leucine** | 8.06 |
| **Lysine** | * |
| **Methionine** | * |
| **Proline** | 13.95 |
| **Serine** | 10.695 |
| **Tyrosine** | * |
| **Threonine** | 7.13 |
| **Valine** | 5.425 |

The (*) denotes amino acids that were not detected, either because they were not present, since the concentration was too low, or they were degraded in the process of analysis.

Regarding size, the protein components are made up of molecules smaller than 10,000 daltons, made up of peptides and free amino acids, Table 6.

**Table 6**

| | |
|---|---|
| Compounds having molecular weight less than 400 Da | 30% w/w |
| Compounds having molecular weight between 400 and 10 KDa | 65% w/w |
| Compounds having molecular weight greater than 10 KDa | 5% w/w |

Lastly, the solid product resulting from enzymatic hydrolysis after centrifugation is a solid with a composition equal to the fermented wool prior to hydrolysis.

## Claims

1. A method for producing a biofertiliser comprising the following steps:
a) shredding wool to a size suitable for degradation by microorganisms
b) bringing the shredded wool from the previous step into contact with whey containing at least one species of lactic acid bacteria and carrying out a first fermentation
c) bringing the product from the previous step into contact with at least one species of keratinolytic bacteria and carrying out a second fermentation to produce the biofertiliser.

2. The method according to the preceding claim, wherein the second fermentation can occur before the first fermentation.

3. The method according to any one of the preceding claims, comprising eliminating at least 90% of the microorganisms present in the wool,
- before carrying out step a) of the method of claim 1 or,
- when the shredded wool is brought into contact with the whey and before the first fermentation
preferably at a temperature between 125°C and 140°C, a pressure between 1.5 and 2 Bar and a time interval between 25 and 35 minutes.

4. The method according to any one of the preceding claims, wherein the wool is not washed prior to shredding.

5. The method according to any one of the preceding claims, wherein the wool comes from alpacas, llamas, sheep and/or goats.

6. The method according to any one of the preceding claims, wherein the shredded wool is mixed with the whey in a ratio of 10:1 to 1:10, preferably until the moisture content of the shredded wool is 15% to 50% by weight.

7. The method according to any one of the preceding claims, wherein an inoculum of at least one species of lactic acid bacteria belonging to the genus *Lactobacillus* or *Streptococcus,* preferably *Lactobacillus rhamnosus,* is added to the whey.

8. The method according to any one of the preceding claims, wherein the first fermentation is carried out for the appropriate time until the pH is 6 or less, preferably the first fermentation lasts between 12 hours and 72 hours and takes place at a temperature between 35°C to 45°C.

9. The method according to any one of the preceding claims, wherein the at least one species of keratinolytic bacteria belongs to the genus *Bacillus,* preferably *Bacillus subtilis.*

10. The method according to any one of the preceding claims, wherein the second fermentation is carried out for the appropriate time until the pH is 8 to 9, preferably the second fermentation lasts between 12 and 120 hours, at a temperature between 35°C and 45°C.

11. A biofertiliser produced according to the method of any one of the preceding claims comprising at least one species of lactic acid bacteria and at least one species of keratinolytic bacteria, preferably of the genus *Lactobacillus* and *Bacillus,* preferably at least the species *Lactobacillus rhamnosus* and *Bacillus subtilis.*

12. A method for producing an agronomic biostimulant and an organic nitrogen fertiliser comprising the following steps:
- performing enzymatic hydrolysis of the product produced after the two fermentations according to the method of any one of the preceding claims 1 to 10, or the product of claim 11, preferably the enzyme used is an endoprotease, more preferably subtilisin;
- separating the liquid fraction from the solid fraction of the product from the previous step, the solid fraction being the organic nitrogen fertiliser;
- concentrating the liquid fraction from the previous step to produce the biostimulant.

13. The method according to the preceding claim, wherein the reaction occurs at a temperature of approximately 50 to 60°C and a pH of 8 to 10 and for a time period between 2 and 24 hours.

14. The method according to any one of the preceding claims 12 to 13, wherein the separation and/or concentration of the liquid fraction from the solid fraction is performed by means of centrifugation, filtration and/or evaporation.

15. An organic biostimulant produced by the method defined in one of claims 12 to 14, which is water-soluble and contains protein hydrolysates and lactic acid.
